# EUROPÄISCHE PATENTSCHRIFT

(11) **EP 2 015 894 B1**
(45) Veröffentlichungstag und Bekanntmachung des Hinweises auf die Patenterteilung: **03.03.2010**
(21) Anmeldenummer: 07725028.0
(22) Anmeldetag: 09.05.2007
(51) Int. Cl.: B23Q 1/01

(54) **TRAGSTRUKTUR FÜR EIN BEARBEITUNGSGERÄT**
SUPPORTING STRUCTURE FOR A MACHINING UNIT
STRUCTURE PORTEUSE POUR UN APPAREIL D'USINAGE

(30) Priorität: 11.05.2006 DE 102006022400
(43) Veröffentlichungstag der Anmeldung: 21.01.2009
(73) Patentinhaber: EEW Maschinenbau GmbH, 24217 Schönberg (DE)
(72) Erfinder: MEYER, Peter, 24217 Schönberg (DE)
(74) Vertreter: UEXKÜLL & STOLBERG
(86) Internationale Anmeldenummer: PCT/EP2007/004106
(87) Internationale Veröffentlichungsnummer: WO 2007/131686

(56) Entgegenhaltungen:
- EP-A1- 1 103 310
- EP-A1- 1 114 694
- EP-A1- 1 344 600
- WO-A-03/086717
- DE-A1- 10 027 509
- JP-A- 6 117 197
- US-A1- 2002 106 981

## Beschreibung

Die Erfindung betrifft eine Tragstruktur für ein Bearbeitungsgerät, wie sie z.B. zum Bearbeiten der Oberfläche eines Schiffsrumpfes verwendet werden kann.

Bei herkömmlichen Tragstrukturen für Bearbeitungsgeräte, die eine Traverseneinrichtung aufweisen, die optional an einer verfahrbaren Gantryeinrichtung angeordnet ist, ist wegen der auftretenden Schwenk- und Verschiebebewegungen beim Führen des Bearbeitungsgeräts ein relativ großer Freiraum erforderlich. Solche herkömmlichen Tragstrukturen sind z.B. in der EP 1 344 600 Bl und der EP 1 103 310 A1 beschrieben. Bei Arbeiten auf engem Raum, z.B. auf einer Werft zwischen dem Schiffsrumpf und den Dockwänden, kann dies zu Problemen führen.

Aus der JP 06 117197 A ist eine Tragstruktur für ein Bearbeitungsgerät mit einer Traverseneinrichtung, an der eine um eine Drehachse drehbare Dreheinrichtung gelagert ist, bekannt, wobei an der Dreheinrichtung eine Schwenkeinrichtung mit einem Führungsarm angeordnet ist, der ein erstes Ende und ein zweites Ende hat, der um eine quer zu der Drehachse verlaufende, im Bereich seines ersten Endes befindliche Schwenkachse verschwenkbar ist und an dem ein Pinolenrohr in Verlängerung des Führungsarms über dessen zweiten Ende hinaus verschiebbar gelagert ist. Diese Vorrichtung kann an einem Raupenfahrzeug montiert werden und dient zum Auftragen einer wasserdichten Beschichtung an der Innenseite eines Tunnels.

Es ist Aufgabe der Erfindung, eine Tragstruktur für ein Bearbeitungsgerät zu schaffen, mit deren Hilfe das Bearbeitungsgerät auf engem Raum geführt werden kann und dabei trotzdem einen großen Aktionsradius hat.

Diese Aufgabe wird gelöst durch eine Tragstruktur mit den Merkmalen des Anspruchs 1. Der Anspruch 11 betrifft die Verwendung einer derartigen Tragstruktur zum Bearbeiten der Oberfläche eines Schiffsrumpfes. Vorteilhafte Ausgestaltungen der Erfindung ergeben sich aus den Unteransprüchen.

Da die Schwenkeinrichtung an der Dreheinrichtung angeordnet ist, lässt sich das Bearbeitungsgerät über einen großen Aktionsbereich bewegen, ohne dass dafür ein großer Freiraum erforderlich ist.

Im Folgenden wird die Erfindung anhand von Ausführungsbeispielen näher beschrieben. Die Zeichnungen zeigen in
- Figur 1 eine: isometrische Ansicht einer Traverseneinrichtung mit Dreheinrichtung und Schwenkeinrichtung einer Ausführungsform der erfindungsgemäßen Tragstruktur, wobei zur Verdeutlichung der wesentlichen Teile manche Bauteile weggelassen sind,
- Figur 2: eine isometrische Ansicht der Dreheinrichtung mit Schwenkeinrichtung aus Figur 1 unter einem anderen Blickwinkel,
- Figur 3: in Teil (a) und (b) zwei Stellungen der Traverseneinrichtung bei in einer Richtung vollverschwenkter Schwenkeinrichtung in Seitenansicht,
- Figur 4: in Teil (a) und (b) zwei Stellungen der Traverseneinrichtung bei in der anderen Richtung vollverschwenkter Schwenkeinrichtung in Seitenansicht,
- Figur 5: in Teil (a) die Anordnung gemäß Figur 3 (b) in Ansicht von oben und in Teil (b) eine Anordnung ähnlich wie in Teil (a) unter einem anderen Drehwinkel der Dreheinrichtung,
- Figur 6: die Anordnung gemäß Figur 4 (a) in Ansicht von oben,
- Figur 7: eine schematische isometrische Ansicht, in der die Traverseneinrichtung aus Figur 1 an einer Gantryeinrichtung angeordnet ist, die längs eines Schiffsrumpfes verfahrbar ist, und
- Figur 8: die Gantryeinrichtung aus Figur 7 in Seitenansicht, wobei mehr Details als in Figur 7 eingezeichnet sind.

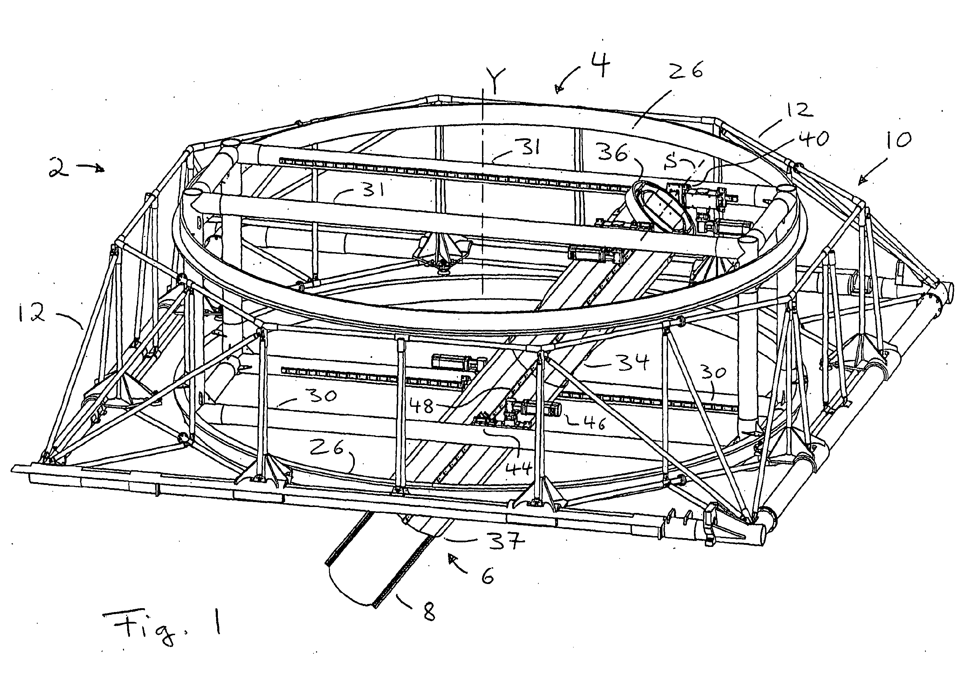

Die anhand eines Ausführungsbeispiels beschriebene Tragstruktur für ein Bearbeitungsgerät weist eine Traverseneinrichtung 2 auf, wie in Figur 1 dargestellt. Der Begriff Traverseneinrichtung ist daran angelehnt, dass die Traverseneinrichtung 2 an einer Gantryeinrichtung eine Transversalbewegung ausführen kann (siehe unten), ist hier aber in allgemeineren Sinne zu verstehen. Insbesondere kann die Traverseneinrichtung 2 je nach Anwendungsfall auch fest montiert sein.

An der Traverseneinrichtung 2 ist eine Dreheinrichtung 4 gelagert, die um eine Drehachse Y drehbar ist. An der Dreheinrichtung 4 ist eine Schwenkeinrichtung 6 mit einem verschwenkbaren Führungsarm angeordnet, der mit einem verschiebbar gelagerten Pinolenrohr 8 über sein freies Ende hinaus verlängerbar ist. Am freien Ende des Pinolenrohrs 8 lässt sich ein in Figur 1 nicht eingezeichnetes Bearbeitungsgerät anbringen. Das Pinolenrohr 8 kann als einzelnes Rohr oder teleskopartig mit einer Anzahl ineinander schiebbarer Rohrelemente gestaltet sein. Das Bearbeitungsgerät kann im Bereich des freien Endes des Pinolenrohrs an einer um mindestens eine Achse verschwenkbaren Halteeinrichtung montiert sein, was die Zahl der Freiheitsgrade und Bewegungsmöglichkeiten weiter erhöht.

Wie aus dem Folgenden ersichtlich, erlaubt die Tragstruktur eine Führung des Bearbeitungsgeräts auf engstem Raum und gleichzeitig bei hoher Stabilität. Abstriche an der Stabilität und Führungsgenauigkeit müssten lediglich dann gemacht werden, wenn das Pinolenrohr 8 mit mehreren teleskopartig ineinander schiebbaren Rohrelementen konstruiert ist.

Die Dreheinrichtung 4 ist in einem Rahmen 10 der Traverseneinrichtung 2 gelagert, der mit Streben 12 versteift ist. Dabei können auch weitere Streben vorgesehen sein, die in Figur 1 nicht eingezeichnet sind, z.B. diagonal verlaufende Streben zum Versteifen einzelner Felder.

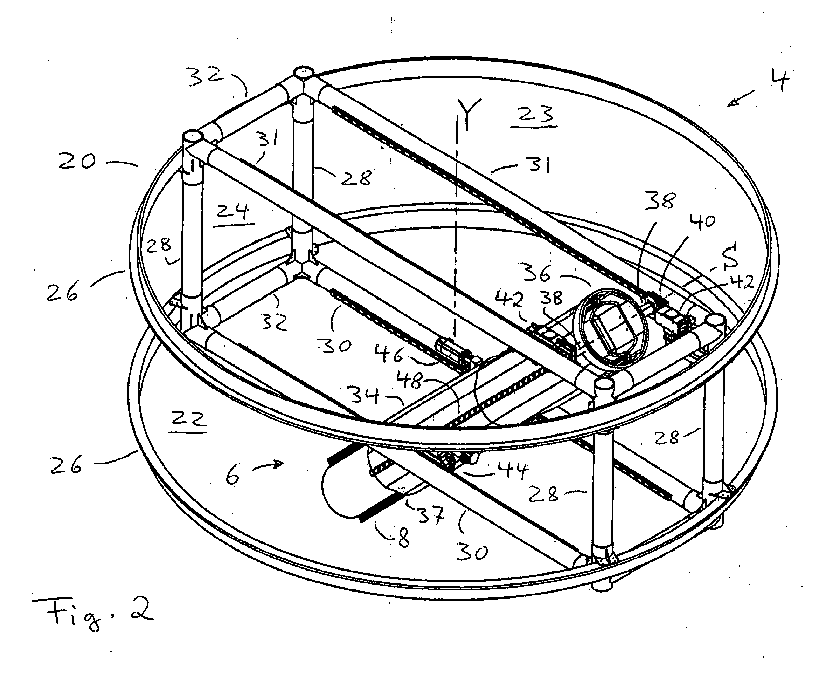

Die Dreheinrichtung 4 weist im Ausführungsbeispiel eine trommelartige Rahmenstruktur 20 auf. In Figur 2 ist die Dreheinrichtung 4 ohne den Rahmen 10 der Traverseneinrichtung 2 dargestellt. Von der Geometrie her ist die trommelartige Rahmenstruktur also zylinderartig mit einer ersten Endseite22 (in den Figuren 1 und 2 unten) und einer zweiten Endseite 23 (in den Figuren 1 und 2 oben) sowie einer Mantelfläche 24. An der ersten Endseite 22 und an der zweiten Endseite 23 befindet sich jeweils eine kreisförmige Führungsbahn 26. Die beiden Führungsbahnen 26 sind durch Rohrstücke 28 miteinander verbunden. Ferner befinden sich zwischen den beiden kreisförmigen Führungsbahnen 26 weitere Verstrebungen, insbesondere in Form von Abstandshaltern und schräg verlaufenden Versteifungsstreben, die aber nicht eingezeichnet sind, um die Figuren nicht zu überfrachten.

Die beiden kreisförmigen Führungsbahnen 26 sind an dem Rahmen 10 mit Hilfe von Rollen gelagert, um eine radiale sowie axiale Führung zu gewährleisten. Diese Rollen sind in den Figuren nicht eingezeichnet. Die Führung kann so ausgeführt sein, dass eine freilaufende oder eine vorgespannte Drehbewegung ermöglicht wird. Andere Arten von Führungen und andere Gestaltungen der Dreheinrichtung 4 sind ebenfalls denkbar. Im Ausführungsbeispiel trägt eine der beiden kreisförmigen Führungsbahnen 26 an ihrer Außenseite einen Zahnkranz, in den ein von einem Elektromotor direkt oder über ein Getriebe angetriebenes Zahnrad eingreift. Dabei sind der Elektromotor und das Getriebe im Bereich des Rahmens 10 montiert. Alternativ kann der Antrieb für die Dreheinrichtung 4 auch an der Dreheinrichtung 4 selbst angeordnet sein, z.B. ein motorgetriebenes Zahnrad, das auf die Innenseite eines mit dem Rahmen 10 fest verbundenen Zahnkranzes wirkt. Es können auch mehrere Antriebe vorgesehen sein, die auf eine Zahnkranz wirken. Bis auf die kreisförmigen Führungsbahnen 26 sind die Elemente für die Lagerung und den Antrieb der Dreheinrichtung 4 an der Traverseneinrichtung 2 nicht eingezeichnet.

An der ersten Endseite.22 der trommelartigen Rahmenstruktur 20 ist eine erste Linearführung 30 angeordnet, die zwei parallel verlaufende Führungsschienen aufweist. Gegenüber der ersten Linearführung 30 befindet sich an der zweiten Endseite 23 eine zweite Linearführung 31, die ähnlich konstruiert ist wie die erste Linearführung 30. Dabei sind die jeweiligen Führungsschienen der ersten Linearführung 30 und der zweiten Linearführung 31 durch Rohrstücke 32 auf Abstand gehalten.

Die beiden Linearführungen 30 und 31 dienen zum Halten und Führen eines Führungsarms 34 der Schwenkeinrichtung 6. Der Führungsarm 34 hat ein erstes Ende 36 und ein zweites Ende 37. Das Pinolenrohr 8 wird mittels eines Antriebs über das zweite Ende 37 aus dem Führungsarm 34 vorgeschoben bzw. darin eingefahren.

Im Bereich seines ersten Endes 37 gehen von dem Führungsarm 34 zwei Lagerzapfen 38 aus, siehe insbesondere Figur 2. Die beiden Lagerzapfen 38 definieren eine Schwenkachse S, um die der Führungsarm 34, also die Schwenkeinrichtung 6, verschwenkbar gelagert ist. Zur Aufnahme der Lagerzapfen 38 dienen zwei zueinander ausgerichtete Führungslager 40, auch als zweites Führungslager bezeichnet. Die Führungslage 40 können mit Hilfe von Antriebseinheiten 42 entlang der beiden Führungsschienen der zweiten Linearführung 31 verfahren werden.

Am mittleren Bereich des Führungsarms 34 greifen zwei Führungslager 44 an, gemeinsam auch als erstes Führungslager bezeichnet. Die Führungslager 44 können mit Hilfe von Antrieben 46 entlang der beiden Führungsschienen der ersten Linearführung 30 bewegt werden. Jedes der beiden Führungslager 44 enthält ein Gelenkteil, das in einer jeweiligen Linearführung 48 läuft, die an der Außenseite des Führungsarms 34 in Längsrichtung des Führungsarm 34 angebracht ist.

Wenn bei feststehender Schwenkachse S die Antriebe 46 entlang der ersten Linearführung 30 bewegt werden, verschwenkt der Führungsarm 34. Dabei wird der Führungsarm 34 einerseits im Bereich der Schwenkachse S und andererseits im Bereich der Führungslager 44 fixiert, wodurch sich aufgrund des relativ großen Hebelarms zwischen der Schwenkachse S und den Führungslagern 44 eine hohe Stabilität ergibt. Die Führungslager 44 können mit Hilfe der Antriebe 46 mit hoher Genauigkeit verfahren werden, so dass sich die Winkelstellung des Führungsarms 34 präzise einstellen lässt. Die Antriebe 46 können z.B. jeweils ein Zahnrad aufweisen, das in eine Zahnstange eingreift, die an der jeweiligen Führungsschiene der ersten Linearführung 30 montiert ist. Andere Möglichkeiten für einen präzisen Antrieb sind ebenfalls denkbar, z.B. eine optische Kodierung, die eine hohe Reproduzierbarkeit für die Position der Antriebe 46 und damit die Winkelstellung des Führungsarms 34 gewährleistet.

Als Alternative zu den Antrieben 46 könnte ein Antrieb vorgesehen sein, der längs der Linearführungen 48 in Richtung des Führungsarms 34 wirkt, wobei die erste Linearführung 30 nur als passive Führung dient. Es kann auch sinnvoll sein, wenn ein derartiger Antrieb zusätzlich zu den Antrieben 46 vorhanden ist, um in Abhängigkeit von der Winkelstellung des Führungsarms 34 den Antrieb als aktiven Antrieb zu nutzen, der das größere Drehmoment für eine Verschwenkung des Führungsarms 34 bereitstellt.

Wenn bei ruhenden Führungslagern 40, also bei feststehender Schwenkachse S, die Führungslager 44 bewegt werden, verschwenkt der Führungsarm 34 in der erläuterten. Weise. Nun ist es aber auch möglich, die Führungslager 40 entlang der zweiten Linearführung 31 zu verfahren. Falls sich die Führungslager 40 und 44 mit gleicher Geschwindigkeit bewegen, ändert sich die Winkelstellung des Führungsarms 34 nicht und der Führungsarm 34 wird in der trommelartigen Rahmenstruktur 20 parallel verschoben. Bei einer Bewegung der Führungslager 40 und 44 mit unterschiedlichen Geschwindigkeiten ändert sich dagegen die Winkelstellung des Führungsarms 34.

Die beschriebene Ausführungsform bietet demnach in der Regel mehrere Möglichkeiten für die Einstellung der räumlichen Position eines am Ende des Pinolenrohrs 8 gelagerten Bearbeitungsgeräts. Auf welche Weise diese Position angefahren wird oder am schnellsten und günstigsten angefahren wird, kann mit einem Rechenprogramm zur Steuerung der Antriebe ermittelt werden.

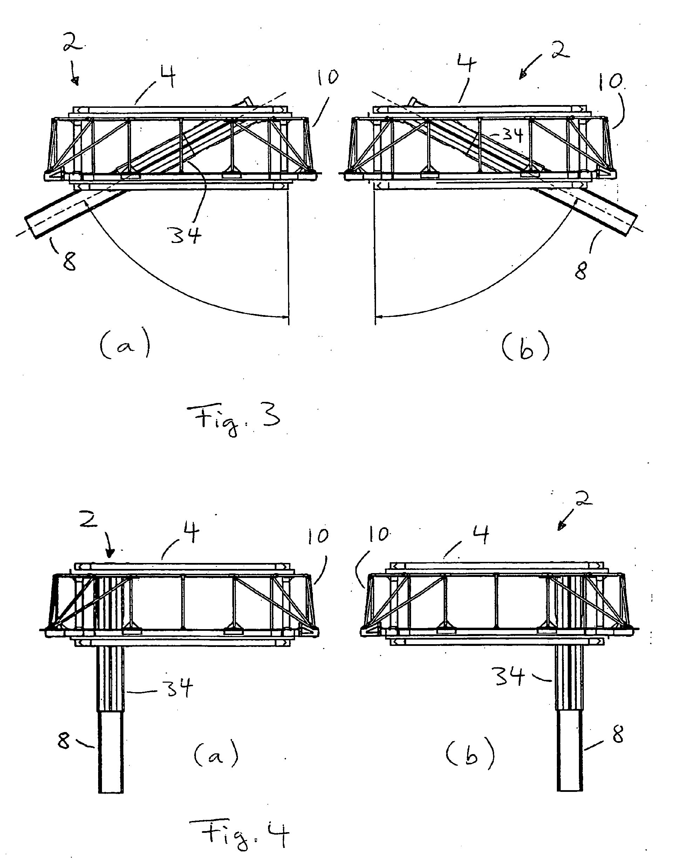

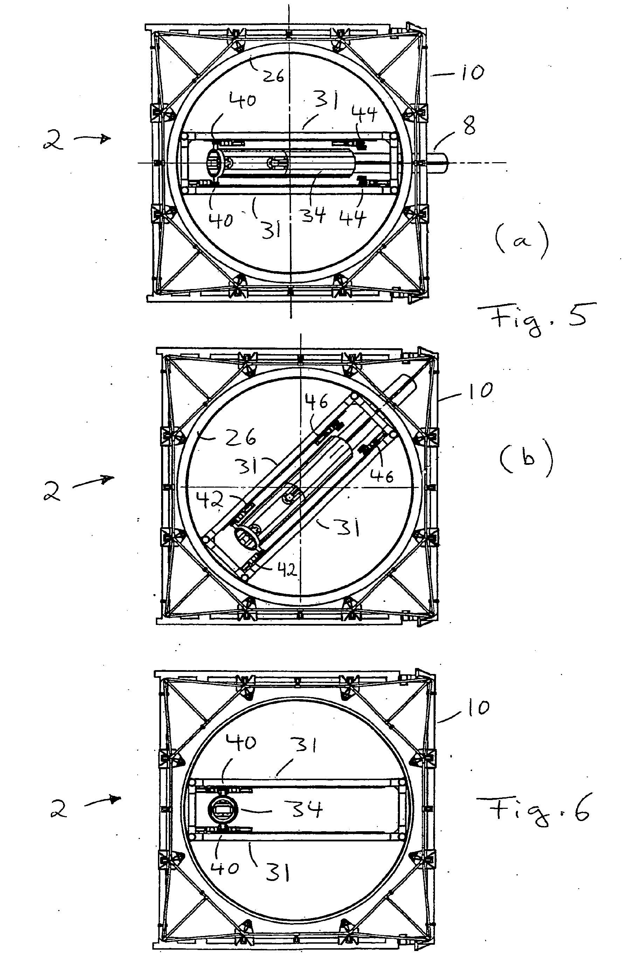

Die Figuren 3 bis 6 veranschaulichen nochmals die Funktionsweise der Vorrichtung. In der Figur 3 (b) befindet sich die Schwenkachse S des Führungsarms 34 in der linken Endposition. Wenn der Führungsarm 34 über den vollen Winkelbereich verschwenkt wird, der in den Figuren 3 (a) und (b) eingezeichnet ist, ergibt sich die Stellung in Figur 4 (a). Die Figuren 5 (a) bzw. 6 zeigen diese Stellungen in einer Ansicht von oben.

Um von der Stellung gemäß Figur 3 (b) in die Stellung gemäß Figur 3 (a) zu gelangen, kann die Dreheinrichtung 4 bei festgehaltenen Führungslagern 40, 44 als Ganzes um 180° gedreht werden. Die Figur 5 (b) zeigt dabei eine Zwischenposition von oben. Eine andere Möglichkeit besteht darin, die Antriebe 42 und 46 gegenläufig zueinander zu bewegen und dabei den Drehwinkel der Dreheinrichtung 4 nicht zu verändern.

Entsprechend lässt sich die Stellung des Führungsarms 34 gemäß Figur 4 (a) durch eine Drehung der Dreheinrichtung 4 um 180° oder durch gleichartiges Verfahren der Antriebe 42 und 46 in die Stellung gemäß Figur 4 (b) überführen.

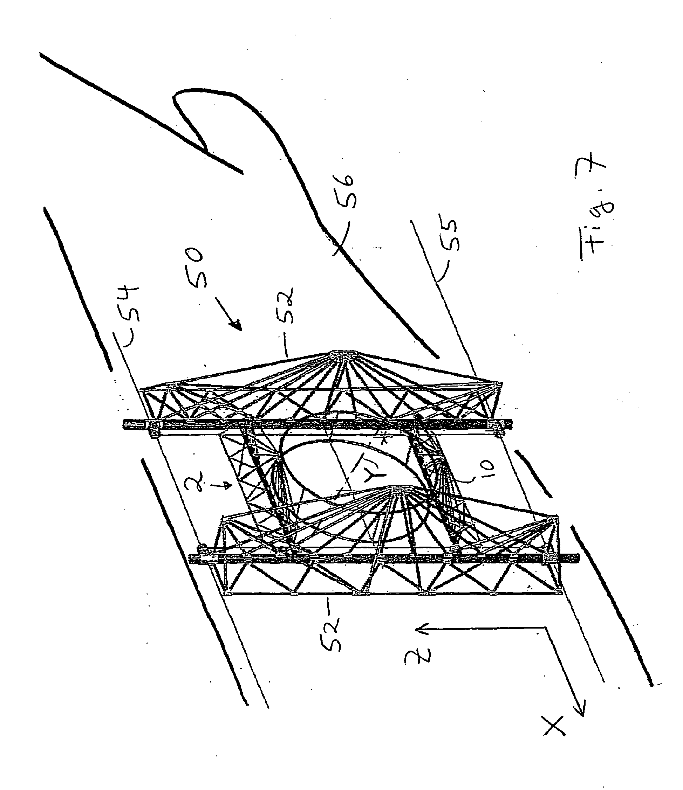

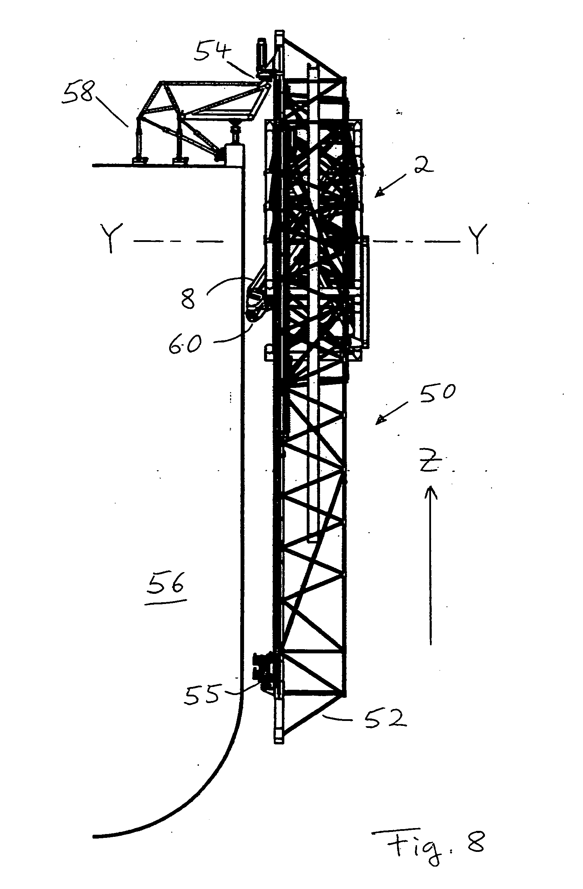

Die Figuren 7 und 8 veranschaulichen, wie die Tragstruktur zum Bearbeiten der Oberfläche eines Schiffsrumpfes angewendet werden kann.

Dabei ist die Traverseneinrichtung 2 verschiebbar an einer Gantryeinrichtung 50 gelagert, die im Ausführungsbeispiel zwei im Wesentlichen vertikal angeordnete Träger 52 mit Führungen für die Traverseneinrichtung 2 sowie in Figur 7 nicht eingezeichnete Verbindungen zwischen den beiden Trägern 52 aufweist. Die Traverseneinrichtung 2 lässt sich also mit Hilfe eines Antriebs nach oben und unten verfahren. Diese Richtung ist in Figur 7 mit Z bezeichnet. In Figur 7 ist von der Traverseneinrichtung 2 nur der Rahmen 10 eingezeichnet; die Dreheinrichtung 4 ist weggelassen.

Die Gantryeinrichtung 50 kann als Ganzes entlang des Schiffsrumpfes verfahren werden. Dabei wird die Gantryeinrichtung 50 von einer oberen Führungsbahn 54 und einer unteren Führungsbahn 55 gehalten und geführt. Die Führungsbahnen 54, 55 sind längs des mit 56 bezeichneten Schiffsrumpfes ausgerichtet. Diese Richtung ist mit X bezeichnet. Die Führungsbahnen 54 und 55 können in ihrem Verlauf der Form des Schiffsrumpfes angepasst sein, so dass sie nicht notwendig geradlinig sein müssen. Das in Figur 7 zur Orientierung eingezeichnete Koordinatensystem ist also nicht notwendig ein kartesisches Koordinatensystem, da zumindest die X-Koordinate als verallgemeinerte Koordinate zu verstehen ist.

In Figur 8 ist zu erkennen, wie die obere Führungsbahn 54 am Schiffsrumpf 56 angebracht ist. Dazu dient eine Halterung 58, die z.B. mit Hilfe von Permanentmagneten am stählernden Oberdeck des Schiffsrumpfes 56 befestigt sein kann. Die untere Führungsbahn 55 stützt sich am Schiffsrumpf 56 ab, was jedoch in Figur 8 nicht eingezeichnet ist. Wie bereits erwähnt, folgen die obere Führungsbahn 54 und die untere Führungsbahn 55 dem Verlauf des Schiffsrumpfes 56 zumindest weitgehend und sind daher im Ausführungsbeispiel gekrümmt. Beim Aufbau der Tragstruktur können die Führungsbahnen 54 und 55 zunächst vorgeformt werden, so dass sie im Wesentlichen den korrekten Verlauf zeigen, während beim Verfahren der Gantryeinrichtung 50 eine automatische Feinkorrektur erfolgen kann, bei der die Position der Führungsrollen der Gantryeinrichtung 50, die an der oberen Führungsbahn 54 und an der unteren Führungsbahn 55 angreifen, während des Verfahrens in X-Richtung laufend über automatische Stellglieder eingestellt wird, so dass sich geometrisch einwandfreie Laufeigenschaften ergeben. Die für die Ansteuerung der Stellglieder erforderlichen Daten lassen sich bei der anfänglichen Einstellung der Gantryeinrichtung 50 mit Hilfe von Kalibrierungsmessungen ermitteln.

In Figur 8 ist das Ende des Pinolenrohrs 8 zu erkennen, das mit Hilfe eines Antriebs in den Führungsarmen 34 hineingefahren und daraus ausgefahren werden kann. Bei der Anordnung gemäß Figur 8 ist das Pinolenrohr 8 einstufig, um eine besonders hohe Positionsgenauigkeit für ein am freien Ende des Pinolenrohrs 8 angeordnetes Bearbeitungsgerät 60 zu gewährleisten. Dass das Pinolenrohr 8 auch teleskopartig oder mehrstufig aufgebaut sein kann, wurde bereits erläutert. Unter dem Pinolenrohr 8 ist hier allgemein eine Verlängerung des Führungsarms 34 zu verstehen, die in Bezug auf den Führungsarm 34 verschiebbar ist. Vorzugsweise ist das Pinolenrohr 8 in Bezug auf den Führungsarm 34 drehfest, während für ein Bearbeitungsgerät erforderliche Drehbewegungen in dem Bearbeitungsgerät erzeugt werden. Grundsätzlich sind aber auch Ausführungen denkbar, bei denen dem Pinolenrohr ein Antrieb zugeordnet ist, der es in eine Drehbewegung in Bezug auf den Führungsarm versetzt.

Das Bearbeitungsgerät 60 ist im Ausführungsbeispiel mittels einer Halteeinrichtung am Ende des Pinolenrohrs 8 montiert, die um mehrere Achsen verschwenkbar ist. Dadurch ergeben sich in der Anwendung vielfältige Steuerungsmöglichkeiten für das Bearbeitungsgerät 60.

Bei einem Verfahren zum Bearbeiten der Oberflächen des Schiffsrumpfes 56 wird zunächst der Schiffsrumpf 56 vermessen, und die Messwerte werden als Funktion des Ortes am Schiffsrumpf 56 abgespeichert. Im Ausführungsbeispiel wird für diesen Schritt als Bearbeitungsgerät 60 eine Messeinrichtung benutzt, die über die Steuerung der Tragstruktur einen konstanten Abstand zu der Oberfläche des Schiffsrumpfes 56 einhält. Da dabei für jeden Ort am Schiffsrumpf 56 die Daten für die Ansteuerung der Tragstruktur vorliegen, also insbesondere der Drehwinkel der Dreheinrichtung 4, der Schwenkwinkel des Führungsarms 34, die Position der Schwenkachse S, die Stellung der Pinole 8 sowie die Positionen in X- und Y-Richtung, kann daraus die jeweilige Information über den Ort am Schiffsrumpf berechnet werden. Das Ergebnis ist im Wesentlichen ein Höhenprofil, das die Unebenheit an der Oberfläche des Schiffsrumpfes 56 widerspiegelt.

Im nächsten Arbeitsschritt wird unter Benutzung der zuvor erhaltenen Messwerte, also insbesondere des Höhenprofils, eine Ausgleichsmasse auf den Schiffsrumpf 56 aufgetragen. Diese Ausgleichsmasse kann danach geglättet und an der Oberfläche beschichtet werden, z.B. mit einer Lackschicht oder mehreren Lackschichten.

Bei allen Bearbeitungsschritten kann ausgenutzt werden, dass für das Bearbeitungsgerät 60 eine genaue Ortsinformation vorliegt, so dass sich das Bearbeitungsgerät 60 sehr präzise führen lässt.

Als Bearbeitungsgerät 60 wird ein für den jeweiligen Bearbeitungsschritt geeignetes Gerät verwendet, z.B. ein Messgerät, ein Fräskopf, ein Schleifgerät oder ein Beschichtungsgerät.

Bei dieser Anwendung erweist sich die erfindungsgemäße Tragstruktur als besonders vorteilhaft, weil sie ein Arbeiten auf engem Raum erlaubt (nicht zuletzt auch wegen der durch die Dreheinrichtung 4 gegebenen Einstellmöglichkeiten), also z.B. in dem schmalen Zwischenraum zwischen einer Schiffswand und einer Dockwand. Dabei lässt sich der Führungsarm 34 sehr stabil und positionsgenau führen.

Ein bevorzugtes Material für die erfindungsgemäße Tragstruktur oder Teile davon sind Kohlefasern oder ein Verbundmaterial mit Kohlefasern, wie z.B. in Expoxidharz oder Polyesterharz eingebettete Kohlefasern. Kohlefasern sind leicht und haben eine sehr hohe Festigkeit. Mit derartigen Materialien lassen sich sehr leichte und trotzdem verwindungssteife Strukturen aufbauen. Besonders bei bewegten Massen ist dies von großem Vorteil, weil dadurch hohe Arbeitsgeschwindigkeiten erzielt werden können. Andere Materialien können ebenfalls verwendet werden, z.B. Edelstahl für die Führungsbahnen 54, 55.

## Patentansprüche

1. Tragstruktur für ein Bearbeitungsgerät (60), mit einer Traverseneinrichtung (2), an der eine um eine Drehachse (Y) drehbare Dreheinrichtung (4) gelagert ist, wobei an der Dreheinrichtung (4) eine Schwenkeinrichtung (6) mit einem Führungsarm (34) angeordnet ist, der ein erstes Ende (36) und ein zweites Ende (37) hat, der um eine quer zu der Drehachse (Y) verlaufende, im Bereich seines ersten Endes (36) befindliche Schwenkachse (S) verschwenkbar ist und an dem ein Pinolenrohr (8) in Verlängerung des Führungsarms (34) über dessen zweiten Ende (37) hinaus verschiebbar gelagert ist, **dadurch gekennzeichnet, dass** die Dreheinrichtung (4) eine trommelartige Rahmenstruktur (20) mit einer ersten Endseite (22) und einer zweiten Endseite (23) aufweist, wobei die trommelartige Rahmenstruktur (20) über ihre Mantelfläche (24) an der Traverseneinrichtung (2) geführt und zu einer Drehbewegung angetrieben ist, dass die Schwenkachse (S) des Führungsarms (34) im Bereich der zweiten Endseite (23) der trommelartigen Rahmenstruktur (20) angeordnet ist und dass die Dreheinrichtung (4) im Bereich der ersten Endseite (22) der trommelartigen Rahmenstruktur (20) eine erste Linearführung (30) aufweist, die zum Führen eines mittleren Bereichs des Führungsarms (34) eingerichtet ist, wobei sich die erste Linearführung (30) vorzugsweise über einen Durchmesser der trommelartigen Rahmenstruktur (20) erstreckt.

2. Tragstruktur nach Anspruch 1, **dadurch gekennzeichnet, dass** längs der ersten Linearführung (30) ein erstes Führungslager (44) verschiebbar ist, das am mittleren Bereich des Führungsarms (34) angreift und zu einer relativen Translationsbewegung in Richtung des Führungsarms (34) eingerichtet ist und das vorzugsweise mit einem längs der ersten Linearführung (30) wirkenden Antrieb (46) versehen ist.

3. Tragstruktur nach Anspruch 2, **dadurch gekennzeichnet, dass** für die relative Translationsbewegung des ersten Führungslagers (44) in Richtung des Führungsarms (34) ein in Richtung des Führungsarms (34) wirkender Antrieb vorgesehen ist.

4. Tragstruktur nach einem der Ansprüche 1 bis 3, **dadurch gekennzeichnet, dass** im Bereich der zweiten Endseite (23) der trommelartigen Rahmenstruktur (20) gegenüber der ersten Linearführung (30) eine zweite Linearführung (31) angeordnet ist, an der die Schwenkachse (S) des Führungsarms (34) mittels eines zweiten Führungslagers (40) verschiebbar gelagert ist, wobei das zweite Führungslager (40) vorzugsweise mit einem längs der zweiten Linearführung (31) wirkenden Antrieb (42) versehen ist.

5. Tragstruktur nach einem der Ansprüche 1 bis 4, **dadurch gekennzeichnet, dass** die Schwenkachse (S) des Führungsarms (34) an der Dreheinrichtung (4) verschiebbar angeordnet ist, vorzugsweise verschiebbar in einer Ebene senkrecht zu der Drehachse (Y).

6. Tragstruktur nach einem der Ansprüche 1 bis 5, **dadurch gekennzeichnet, dass** das Pinolenrohr (8) einstufig ist oder teleskopartig mehrstufig ineinanderschiebbar ist und dass ein Antrieb zum Verschieben bzw. Aus- und Einfahren des Pinolenrohrs (8) vorgesehen ist.

7. Tragstruktur nach einem der Ansprüche 1 bis 6, **dadurch gekennzeichnet, dass** das freie Ende des Pinolenrohrs (8) zur Anbringung eines Bearbeitungsgeräts (60) eingerichtet ist, wobei optional im Bereich des freien Ende des Pinolenrohrs (8) eine um mindestens eine Achse verschwenkbare Halteeinrichtung montiert ist.

8. Tragstruktur nach einem der Ansprüche 1 bis 7, **dadurch gekennzeichnet, dass** die Traverseneinrichtung (2) an einer Gantryeinrichtung (50) angeordnet ist, die an einem Führungssystem (54, 55) mittels eines Antriebs längs einer vorgegebenen Bahn (X) verfahrbar ist.

9. Tragstruktur nach Anspruch 8, **dadurch gekennzeichnet, dass** die Traverseneinrichtung (2) verschiebbar an der Gantryeinrichtung (50) gelagert ist, vorzugsweise quer zu der vorgegebenen Bahn (X) verschiebbar, wobei ein in Verschieberichtung (Z) wirkender Antrieb vorgesehen ist.

10. Tragstruktur nach einem der Ansprüche 1 bis 9, **gekennzeichnet durch** Rahmenstrukturen (10, 20, 50) mit Kohlefaserstangen, die vorzugsweise zumindest teilweise als Rohre ausgebildet sind.

11. Verwendung einer Tragstruktur nach Anspruch 8 oder 9 zum Bearbeiten der Oberfläche eines Schiffsrumpfes (56), wobei mit einem jeweiligen Bearbeitungsgerät (60), das im Bereich des freien Endes des Pinolenrohrs (8) angeordnet ist, der Schiffsrumpf (56) zumindest teilweise abgefahren und einem jeweiligen Bearbeitungsschritt unterzogen wird.

12. Verwendung nach Anspruch 11, **gekennzeichnet durch** die Bearbeitungsschritte
- Vermessen des Schiffsrumpfes (56) und Abspeichern der Messwerte als Funktion des Ortes am Schiffsrumpf (56),
- Auftragen einer Ausgleichsmasse unter Benutzung der zuvor erhaltenen Messwerte,
- Glätten der Ausgleichsmasse,
- Beschichten der Oberfläche der Ausgleichsmasse.

13. Verwendung nach Anspruch 11 oder 12, **dadurch gekennzeichnet, dass** das Führungssystem (54, 55) eine obere Führungsschiene (54) und eine untere Führungsschiene (55) aufweist, wobei die obere Führungsschiene (54) vorzugsweise im Bereich des Decks des Schiffsrumpfes (56) befestigt ist und wobei sich die untere Führungsschiene (55) vorzugsweise im unteren Bereich des Schiffsrumpfes (56) abstützt.

## Claims

1. Supporting structure for a machining device (60), comprising a crossbeam apparatus (2) on which a rotation means (4) which is rotatable about an axis of rotation (Y) is mounted, a swivel means (6) comprising a guide arm (34) being arranged on the rotation means (4), which guide arm has a first end (36) and a second end (37), is able to swivel about a swivel axis (S) extending transversely to the axis of rotation (Y) and located in the region of its first end (36), and on which guide arm a sleeve pipe (8) is displaceably mounted as an extension of the guide arm (34) beyond the second end (37) thereof, **characterised in that** the rotation means (4) has a drum-like frame structure (20) with a first end side (22) and a second end side (23), the drum-like frame structure (20) being guided via the lateral surface (24) thereof on the crossbeam apparatus (2) and driven so as to move in a rotary manner, **in that** the swivel axis (S) of the guide arm (34) is arranged in the region of the second end side (23) of the drum-like frame structure (20), and **in that** the rotation means (4) has, in the region of the first end side (22) of the drum-like frame structure (20), a first linear guide (30) which is equipped to guide a central region of the guide arm (34), the first linear guide (30) preferably extending over a diameter of the drum-like frame structure (20).

2. Supporting structure according to claim 1, **characterised in that** a first guide bearing (44) is displaceable along the first linear guide (30), acts on the central region of the guide arm (34), is equipped to carry out a relative translational movement in the direction of the guide arm (34) and is preferably provided with a drive (46) acting along the first linear guide (30).

3. Supporting structure according to claim 2, **characterised in that** a drive acting in the direction of the guide arm (34) is provided for the relative translational movement of the first guide bearing (44) in the direction of the guide arm (34).

4. Supporting structure according to any one of claims 1 to 3, **characterised in that**, in the region of the second end side (23) of the drum-like frame structure (20), opposite the first linear guide (30), a second linear guide (31) is arranged, on which the swivel axis (S) of the guide arm (34) is displaceably arranged by means of a second guide bearing (40), the second guide bearing (40) preferably being provided with a drive (42) acting along the second linear guide (31).

5. Supporting structure according to any one of claims 1 to 4, **characterised in that** the swivel axis (S) of the guide arm (34) is displaceably arranged on the rotation means (4), and is preferably displaceable in a plane perpendicular to the axis of rotation (Y).

6. Supporting structure according to any one of claims 1 to 5, **characterised in that** the sleeve pipe (8) is a single-part pipe or is a multiple-part pipe, the parts of which can be slid into one another in a telescopic manner, and **in that** a drive is provided to displace or extend and retract the sleeve pipe (8).

7. Supporting structure according to anyone of claims 1 to 6, **characterised in that** the free end of the sleeve pipe (8) is set up for attaching a machining device (60), a retaining means which can be swivelled about at least one axis optionally being mounted in the region of the free end of the sleeve pipe (8).

8. Supporting structure according to any one of claims 1 to 7, **characterised in that** the crossbeam apparatus (2) is arranged on a gantry apparatus (50) which can be moved on a guide system (54, 55) along a predetermined path (X) by a drive.

9. Supporting structure according to claim 8, **characterised in that** the crossbeam apparatus (2) is displaceably mounted on the gantry apparatus (50) and is preferably displaceable transverse to the predetermined path (X), a drive acting in the direction (Z) of displacement being provided.

10. Supporting structure according to any one of claims 1 to 9, **characterised by** frame structures (10, 20, 50) comprising carbon fibre rods which are preferably formed at least in part as pipes.

11. Use of a supporting structure according to either claim 8 or claim 9 for machining the surface of a hull (56) of a ship, the hull (56) of the ship being travelled over at least in part and subjected to a respective machining step by a respective machining device (60) arranged in the region of the free end of the sleeve pipe (8).

12. Use according to claim 11, **characterised by** the machining steps
- measuring the hull (56) of the ship and storing the measurements as a function of the location on the hull (56) of the ship,
- applying a levelling compound using the previously obtained measurements,
- smoothing the levelling compound,
- coating the surface of the levelling compound.

13. Use according to either claim 11 or claim 12, **characterised in that** the guide system (54, 55) has an upper guide rail (54) and a lower guide rail (55), the upper guide rail (54) preferably being fixed in the region of the deck of the hull (56) of the ship and the lower guide rail (55) preferably being supported in the lower region of the hull (56) of the ship.

## Revendications

1. Structure de support pour un appareil de traitement (60), comportant un ensemble de traverses (2), sur lequel est monté un dispositif rotatif (4) apte à tourner autour d'un axe de rotation (Y), sachant que sur le dispositif rotatif (4) est agencé un dispositif pivotant (6) avec un bras de guidage (34), qui comporte une première extrémité (36) et une deuxième extrémité (37), le bras de guidage (34) étant apte à pivoter autour d'un axe de pivotement (S), orienté transversalement à l'axe de rotation (Y) et situé dans la zone de sa première extrémité (36), et sur lequel est monté un manchon (8) apte à coulisser dans le prolongement du bras de guidage (34) au-delà de la deuxième extrémité (37) de celui-ci, **caractérisée en ce que** le dispositif rotatif (4) comporte une structure de cadre (20) en forme de tambour avec une première face d'extrémité (22) et une deuxième face d'extrémité (23), ladite structure de cadre (20) en forme de tambour étant guidée par son enveloppe (24) sur l'ensemble de traverses (2) et étant entraînée dans un mouvement de rotation, **en ce que** l'axe de pivotement (S) du bras de guidage (34) est disposé dans la zone de la deuxième face d'extrémité (23) de la structure de cadre (20) en forme de tambour, et **en ce que** le dispositif rotatif (4) comporte, dans la zone de la première face d'extrémité (22) de la structure de cadre (20) en forme de tambour, un premier guidage linéaire (30), qui est conçu pour guider une zone centrale du bras de guidage (34), ledit premier guidage linéaire (30) s'étendant de préférence sur un diamètre de la structure de cadre (20) en forme de tambour.

2. Structure de support selon la revendication 1, **caractérisée en ce que** le long du premier guidage linéaire (30) est déplaçable un premier palier de guidage (44), qui est attaché à la zone centrale du bras de guidage (34) et qui est conçu pour effectuer un mouvement de translation relatif vers le bras de guidage (34), et qui, de préférence, est muni d'un système d'entraînement (46) agissant le long du premier guidage linéaire (30).

3. Structure de support selon la revendication 2, **caractérisée en ce que** pour le mouvement de translation relatif du premier guidage linéaire (44) vers le bras de guidage (34), il est prévu dans la structure du bras de guidage un système d'entraînement agissant dans la direction du bras de guidage (34).

4. Structure de support selon l'une quelconque des revendications 1 à 3, **caractérisée en ce que** dans la zone de la deuxième face d'extrémité (23) de la structure de cadre (20) en forme de tambour, en face du premier guidage linéaire (30), est agencé un deuxième guidage linéaire (31), sur lequel l'axe de pivotement (S) du bras de guidage (34) est agencé de manière déplaçable au moyen d'un deuxième palier de guidage (40), ledit deuxième palier de guidage (40) étant muni, de préférence, d'un système d'entraînement (42) agissant le long du deuxième guidage linéaire (31).

5. Structure de support selon l'une quelconque des revendications 1 à 4, **caractérisée en ce que** l'axe de pivotement (S) du bras de guidage (34) est agencé sur le dispositif rotatif (4) de manière déplaçable, de préférence de manière déplaçable dans un plan perpendiculaire à l'axe de rotation (Y).

6. Structure de support selon l'une quelconque des revendications 1 à 5, **caractérisée en ce que** le manchon (8) est à un seul étage ou est à plusieurs étages pouvant coulisser de manière télescopique l'un dans l'autre, et **en ce qu'**un système d'entraînement est prévu pour le déplacement, à savoir le déploiement et la rentrée, du manchon (8).

7. Structure de support selon l'une quelconque des revendications 1 à 6, **caractérisée en ce que** l'extrémité libre du manchon (8) est conçue pour le montage d'un appareil de traitement (60), un dispositif de maintien, apte à pivoter autour d'au moins un axe, étant monté en option dans la zone de l'extrémité libre du manchon (8).

8. Structure de support selon l'une quelconque des revendications 1 à 7, **caractérisée en ce que** l'ensemble de traverses (2) est disposé sur un système porteur (50), qui est apte à se déplacer sur un système de guidage (54, 55) au moyen d'un système d'entraînement le long d'une voie (X) prédéfinie.

9. Structure de support selon la revendication 8, **caractérisée en ce que** l'ensemble de traverses (2) est monté sur le système porteur (50) de manière déplaçable, de préférence de manière déplaçable transversalement à la voie (X) prédéfinie, sachant qu'il est prévu un système d'entraînement agissant dans la direction de déplacement (Z).

10. Structure de support selon l'une quelconque des revendications 1 à 9, **caractérisée par** des structures de cadre (10, 20, 50) avec des barres en fibres de carbone, qui sont réalisées, de préférence au moins en partie, sous forme de tubes.

11. Utilisation d'une structure de support selon la revendication 8 ou 9 pour le traitement de la surface de la coque (56) d'un bateau, un appareil de traitement (60) respectif, qui est agencé dans la zone de l'extrémité libre du manchon (8), étant déplacé sur au moins une partie de la coque (56) du bateau et celle-ci étant soumise à une étape de traitement respective.

12. Utilisation selon la revendication 11, **caractérisée par** les étapes de traitement :
- mesurage de la coque (56) du bateau et mémorisation des valeurs de mesure en fonction du lieu sur la coque (56) du bateau,
- dépôt d'une matière d'égalisation en utilisant les valeurs de mesure obtenues précédemment,
- lissage de la matière d'égalisation,
- application d'un revêtement sur la surface de la matière d'égalisation.

13. Utilisation selon la revendication 11 ou 12, **caractérisée en ce que** le système de guidage (54, 55) comporte un rail de guidage supérieur (54) et un rail de guidage inférieur (55), ledit rail de guidage supérieur (54) étant fixé de préférence dans la zone du pont de la coque (56) du bateau, et ledit rail de guidage inférieur (55) prenant appui, de préférence, dans la zone inférieure de la coque (56) du bateau.
